# EUROPEAN PATENT APPLICATION

(11) **EP 3 372 824 A1**
(43) Date of publication of application: **12.09.2018**
(21) Application number: 17159680.2
(22) Date of filing: 07.03.2017
(51) Int. Cl.: F03D 1/00, F03D 80/00, F16B 5/02, F16B 37/06

(54) **NACELLE COVER FOR WIND TURBINES**

(71) Applicant: Adwen GmbH, 27572 Bremerhaven (DE)
(72) Inventor: Taubenrauch, Elmar, 27639 Wurster Nordseeküste (DE)
(74) Representative: Prinz & Partner mbB

(57) **Abstract**

The present invention relates to a nacelle (2) for a wind turbine (1), the nacelle (2) comprising an support frame (15) and a nacelle cover (6) coupled to the support frame (15), wherein the nacelle cover (6) comprises a self-supported nacelle roof (6, 7) comprising a plurality of panels (34) made of a composite, the panels (34) being connected to each other by means of connection flanges (37) integral to the panels (34), wherein the self-supported nacelle roof (6, 7) extends, while being unsupported by the support frame (15) at least in a center section (46) of the self supported roof (7), from a first lateral side of the nacelle (2) to a second lateral side of the nacelle (2). The invention further relates to a wind turbine (1) comprising the nacelle (2), a wind park comprising a plurality of wind turbines and methods.

## Description

### Field

The invention relates to a nacelle for a wind turbine.

### Background

Wind is one of the most important renewable energy technologies. Wind turbines (also referred to as a wind driven power plants, wind turbine generators, or wind energy converters) are more and more arranged in large-scale offshore wind parks. There are many technical challenges relating to these offshore wind parks, as for example the assembly of parts and the transport, the erection of the wind turbine in the sea and the maintenance of the wind turbines.

WO 2009/132671 A2 discloses a wind turbine comprising a nacelle with a paneling. The paneling is configured with a hatch opening that is arranged in the paneling covering surface. The hatch opening is sufficiently large in dimension to allow components to be removed or introduced in an upward direction from the top into the nacelle over the whole area of the drive train of the wind energy installation. The hatch opening can be opened and closed by a hatch cover that is configured to be slid as a whole along the top of the nacelle. Furthermore, a helicopter hoisting platform is provided on top of the nacelle and the cover is configured to slide below the hoisting platform in order to open the hatch.

### Summary

It is an object of the invention to provide an improved nacelle of a wind turbine that allows the nacelle, the wind power installation or its parts to be easily manufactured, transported, assembled and mounted, particularly for offshore wind parks. Furthermore, due to aspects of the invention, the nacelle comprises only a relatively small number of components (compared to the prior art).

According to an aspect, an improved nacelle for a wind turbine is provided. The nacelle comprises a support frame and a nacelle cover coupled to the support frame. The nacelle cover comprises a self-supported nacelle roof comprising a plurality of panels made of a composite. The panels are connected to each other by means of connection flanges integral to the panels. The self-supported nacelle roof extends, while being unsupported by the support frame, at least in a center section on the self supported roof from a first lateral side of the nacelle to a second lateral side of the nacelle. The self-supported nacelle roof can also extend, while being unsupported by the support frame, at least in a center section on the self supported roof from a front to a rear side of the nacelle, i.e. over more than half the longitudinal length and in particular over more than 70% or substantially over the entire longitudinal length of the nacelle..

In the context of this description the following three dimensions in form of a Cartesian coordinate system are used. The nacelle extends in a vertical direction (substantially parallel to the axial extension of a tower on which the nacelle can be mounted), and in a horizontal plane defined by a longitudinal direction substantially parallel to a drive train to be located in the nacelle (it should be considered though, that the drive train can be slightly vertically inclined by approximately 5°) and a transversal direction. The longitudinal direction and the transversal direction are both perpendicular to the vertical direction and to each other. In other words, the three dimensions to describe the nacelle are vertical, longitudinal and transversal.

The nacelle comprises a support frame. The support frame can comprise a framework of beams (truss members). The beams can be metallic beams. In particular, the beams can be steel beams comprising a steel alloy and/or aluminum beams comprising an aluminum alloy. The support frame can comprise - among others - a first upper lateral longitudinal beam at a first lateral side of the nacelle and a second upper lateral longitudinal beam at a second lateral side of the nacelle being opposite to the first lateral side.

The support frame can comprise a lower/inner portion (which is referred to as machine frame or inner support frame) and a surrounding/outer portion (which is referred to as outer support frame) in the perimeter of the support frame. The support frame, and in particular the inner support frame can be connected to the main frame of the wind turbine. In other words, the framework structure of the support frame can be arranged along a perimeter of the machine frame. The framework structure can be connected to the machine frame. The framework structure can extend from the machine frame along the vertical direction. The first and the second upper lateral longitudinal beams can terminate lateral sections of the framework structure in the vertical direction at an upper end. Stated differently, the first and the second upper lateral longitudinal beams are arranged on top of the lateral sections of the framework structure, i.e. the first and second upper lateral longitudinal beams are part of the outer support frame.

A (central) top section of the framework structure of the support frame can be free of beams, truss members or the like to provide an upper access opening or an upper passageway for insertion, removal and replacement of components. There may be no further transversal or longitudinal beams between the first and second upper lateral longitudinal beams within the upper access opening/upper passageway. Stated differently, the inner support frame does not project over the installation space of the drive train. The framework structure can be free from intermediate transversal and longitudinal beams or truss members above the drive train. For example, a main shaft assembly, the gear box, and/or the generator can then be inserted into the nacelle or be removed from the nacelle via the upper passageway in the top section of the framework structure of the support frame. Advantageously, the whole drive train comprising the main shaft assembly, the gearbox and the generator can be lowered into the nacelle and/or lifted from the nacelle through the upper access opening or upper passageway in the top section of the framework structure.

A bottom section of the framework structure, i.e. the machine frame / inner support frame can comprise a lower access opening or lower passageway for lowering down or winching up components such as the generator, the main shaft assembly, the gearbox or other parts.

All this provides for a substantial weight and cost reduction. Advantageously, the support frame without intermediate transversal or longitudinal cross beams provides an access opening and space for a service crane that is configured to roll on the first and second upper lateral longitudinal beams, providing internal lifting capacity for regular maintenance work.

According to another aspect, the nacelle comprises a nacelle cover. The nacelle cover protects the drive train and other internal components of the wind power installation from the harsh environmental conditions (in particular humid and salty air in case of offshore installation sites) the wind turbine is exposed to. The nacelle cover can be coupled (attached) to the support frame. In particular, the nacelle cover can be (indirectly) coupled (via brackets) to beams of the outer support frame.

The nacelle cover can comprise lateral nacelle side walls, a nacelle front face, a nacelle rear wall, a nacelle bottom cover, and a nacelle roof. The term "front face" is used instead of the term "front wall" to emphasize that a central portion of the front side of the nacelle is open to provide a passage for the main shaft. The open central portion of the front side of the nacelle is covered by the rotor/spinner of the wind turbine. The walls (and the surrounding portion of the front face) advantageously can be composed of panels of a composite material. Stated differently, the nacelle cover comprises and/or consists of a plurality of panels of a composite material.

According to an advantageous aspect, the lateral side walls or side panels of the nacelle can be coupled to the (outer) support frame. The nacelle front face or front panels and/or the nacelle rear wall or rear panels can also be coupled to the (outer) support frame. Also, the nacelle bottom cover or bottom panels and/or some of the nacelle roof panels can be coupled to the (outer) support frame. Advantageously, however, only the lateral side walls (panels), the bottom cover (panels) of the nacelle and optionally the nacelle roof (panels) along an outer circumferential rim of the nacelle roof may be coupled to the (outer) support frame. Stated differently, the nacelle cover can be laterally supported by the outer support frame and the nacelle roof may comprise a center section which is only supported by other panels of the nacelle cover.

In other words, the nacelle roof can be self-supported. According to this aspect, the nacelle roof or at least a center section of the nacelle roof is not supported by the support frame. Advantageously, the nacelle roof can be supported by the nacelle side panels, rear panels and/or the nacelle front panels. Stated differently, the self-supported nacelle roof may be supported in a lateral region of the nacelle, and in the rear and/or front region of the nacelle.

The nacelle roof may (only) be supported along an outer circumference (rim), without intermediate bearings in an area between the first and the second upper lateral longitudinal beams of the (outer) support frame. The self-supported nacelle roof can extend, while being unsupported by the support frame, between the first upper lateral longitudinal beam and the second upper lateral longitudinal beam. The first and second upper lateral longitudinal beams may not be directly coupled (by brackets etc) to at least a center (central) section of the nacelle roof.

This aspect provides for an integrated design or integrated configuration with fewer parts requiring reduced assembly efforts. The self-supporting structure of the nacelle cover further reduces the weight and complexity of the support frame even further.

The panels of the nacelle cover are advantageously made of a composite, in particular a fiber reinforced polymer. The fiber reinforced polymer can be a glass fiber reinforced polymer (GFRP). A glass fiber reinforced polymer, also known as "Fiberglass" or "fiberglass" is a type of fiber-reinforced plastic where the reinforcement fiber is specifically glass fiber. The fibers may be randomly arranged and flattened into a sheet (called a chopped strand mat), or woven into a fabric. Alternatively, the fibers of a layer of the composite may be unidirectionally aligned. The polymer matrix may be a thermoset polymer matrix, most often based on thermosetting polymers such as epoxy, polyester resin, or vinylester, or a thermoplastic. Glass fibers are made of various types of glass depending upon the fiberglass use. These glasses all contain silica or silicate, with varying amounts of oxides of calcium, magnesium, and sometimes boron. Other common names for fiberglass are glass-reinforced plastic (GRP), glass-fiber reinforced plastic (GFRP) or GFK (from German: Glasfaserverstarkter Kunststoff). Since glass fiber itself is sometimes referred to as "fiberglass", the composite is also called "fiberglass reinforced plastic." The present description also uses the term "composite" for GFRP or GRP.

The panels can be connected to each other by means of overlapping flanges, which are integral to the panels. The flanges advantageously extend in the same plane as the panel to which it belongs. Flanges of curved panels may accordingly extend in a direction substantially tangential to the curve, i.e. continue in the direction of (overall) extension in the region of the panel adjacent to the flange. In other words, the respective flange extends straightly (not bent or curved) from the panel.

Split lines (of the flange connections) between at least some, or a majority of the panels of the nacelle cover can extend in flat planes perpendicular to the surface of the panels. Advantageously, the flat planes of crossing split lines can be perpendicular to each other. The flat planes of parallel split lines can be parallel. In particular, the split lines between the lateral panels (on the lateral side of the nacelle cover) can be substantially straight in a top view on the respective side and either extend in parallel to each other or extend perpendicular to each other. There can, for example be at least three parallel horizontal split lines within one lateral side of the nacelle cover which extend in horizontal flat planes and the horizontal flat planes are parallel to each other. There can further be at least two or three vertical split lines which extend in vertical flat planes and the vertical flat planes are parallel to each other. The vertical flat planes and the horizontal flat planes are perpendicular to each other.

Advantageously, the arrangement of the flanges (and the panels) can be based on a high-point drainage concept. Accordingly, the flange of a higher panel overlaps the flange of a lower complementary panel of a flange connection on an outer side of the nacelle cover in a downward direction. This aspect exploits gravitational forces such that a water flow (e.g. caused by rain) is directed away from the split line (of the flange connection).

Advantageously, the flange connection can comprise reinforcing angular ("L"-shaped) beams or similar profiled metal bars, which can be arranged along the flanges, thereby becoming a part of the flange connection. The reinforced flange connection allows for a simple and robust construction of the nacelle cover.

According to another advantageous aspect, the nacelle cover comprises at least two different flange connections, dependent on the fitting conditions and whether the flange connections are configured to be detachable flange connections or permanent flange connections. A first flange connection may comprise a rivet/clinch nut and a bolt. A second flange connection may comprise a clinch bolt and a normal nut. A first flange connection may comprise two metal bars on opposite sides of the flanges. A second flange connection may comprise only one metal bar on one side of the flange connection.

At least one of the panels of a flange connection may comprise a drip edge adjacent to the flange connection.

At least one of the flange connections may be located in an indentation with respect to a surrounding surface of the adjacent panels. This kind of flange connection may advantageously be used at the bottom of a nacelle. The flange connection does then have greater altitude (level, height) than the surrounding panels which improves water tightness.

The metal bars of the flanges can (collectively) be arranged and conductively interconnected such that they form a faraday cage to provide a lightning protection of the drive train and other components.

The flange connections may be configured to constitute a substantially maintenance free connection, having an expected/calculated lifetime of approximately twenty-five years.

The configuration of the flange connections and their location and orientation around the nacelle cover as well as the configuration of the panels provides that the nacelle cover is more/better self-supporting, i.e. requires less connection points (brackets) to the support frame than prior art solutions. According to another advantageous aspect, at least one panel may comprise a sandwich structure having a foam core.

Further, at least one panel of the self-supported nacelle roof can be reinforced by at least one rib. Advantageously, the rib can be an integral part of the panel. There may be a plurality of ribs located in the panels of the nacelle roof. The panels comprising the ribs may be formed in a sandwich construction comprising a core of foam. Advantageously, the nacelle roof can thereby be configured to sustain snow loads (highest load on the roof), live loads load (e.g. from maintenance work) and fall arrest loads.

A majority of the connection flanges between adjacent panels of a center section of the self-supported roof can extend in the transversal direction. According to this aspect, it has been found out that it is more advantageous to arrange the panels such that they extend from lateral side to lateral side and are shorter in longitudinal direction than in transversal direction rather than being longer in longitudinal direction than in transversal direction. This provides improved stability and allows reducing the number of ribs or even allows the ribs to be totally avoided.

In other words: One or more panels of the roof of the nacelle can be configured to extend from one lateral side to the other lateral side of the nacelle. The length of the panel(s) in the transversal direction may then be greater than the width of the panel(s) in longitudinal direction. This configuration can advantageously apply at least to a first plurality of inner roof panels close to the hub of the nacelle (panels in the front section of the roof of the nacelle). This provides improved stability and allows reducing the number of ribs or even allows the ribs to be totally avoided.

However, alternatively, the first plurality of inner roof panels can extend in the longitudinal direction and the first plurality can be located closer to the hub of the nacelle than to the rear of the nacelle.

A second plurality of inner roof panels, for example in an area closer to the rear end of the nacelle, can be configured to extend from one lateral side to the other lateral side of the nacelle. The length of the panel(s) in the transversal direction may then be greater than the width of the panel(s) in longitudinal direction.

According to another advantageous aspect, a number of the panels of the self-supported roof can be equal to or greater than four, equal to or greater than five or equal to or greater than six and/or the number of panels can be four, five, six, seven, eight, nine or ten. Advantageously, the number of panels can be lower than thirty, in particular lower than twenty, more particularly lower than fifteen.

Advantageously, the panels are configured to comprise an enveloping cuboid that fits into standardized freight containers.

According to another advantageous aspect, the center of the self-supported nacelle roof can be configured as a large removable and detachable hatch for extensive service operations. This aspect can provide free and easy access for partly or complete drive train replacement.

According to another advantageous aspect, the nacelle cover, (in particular the side panels of the nacelle cover) can be mounted to the beams of the support frame by (adjustable) brackets. This adjustability can account for fabrication tolerances.

According to another advantageous aspect, the nacelle roof can be configured to be (at least partly) removable and detachable such that parts of or the complete drive train can be lifted upwardly and outside the nacelle when the nacelle roof or parts of the nacelle roof are removed. Stated differently, center roof sections of the nacelle roof can be configured as a sealed removable lid. For extensive service operations the center roof sections can be removed. Advantageously, the center roof sections can be removed individually or as a group to provide a variety of opening sizes. This aspect enables the extraction of large internal components in relatively quick maneuvers, as only the center roof sections have to be removed to provide a big opening.

Some of the sections can be configured as hinged access hatch cover. The hinged access hatch cover(s) can be configured to open (revolve) about 90° or more. For example, the hatch covers can also be configured to revolve about approximately 180°, such that the hatch covers lie flat against the surrounding surface. In other words, the hatch covers can revolve about a value of approximately 90° to 180°, for example approximately 120°.

According to another advantageous aspect, the nacelle can comprise a crane mounted on a trolley. The trolley can be configured to roll on the first and second upper longitudinal lateral beams along the entire nacelle internals, in particular the entire drive train. This aspect allows for higher and wider coverage with internal crane service.

Advantageously the trolley can be locked in a parking position, if the entire drive train or parts of the drive train are lifted.

The present invention also provides a wind turbine comprising the nacelle according to the aspects and embodiments of the invention.

The present invention also provides a wind park comprising a plurality of wind turbines comprising the nacelle according to the aspects and embodiments of the invention.

The invention also provides a method of manufacturing and assembling a nacelle according to the aspects and embodiments of the invention.

### Brief description of drawings

Further aspects and characteristics of the invention will ensue from the following description of preferred embodiments of the invention with reference to the accompanying drawings, wherein
- FIG. 1 is a simplified perspective view of a wind turbine,
- FIG. 2 is a simplified perspective view of a nacelle of the wind turbine, the nacelle comprising a support frame,
- FIG. 3 is a simplified perspective view of a support frame of a nacelle,
- FIG. 4 is a simplified side view of a support frame.
- FIG. 5 is a simplified top view of the support frame,
- FIG. 6 is a simplified cross-sectional view of the support frame,
- FIG. 7 is a simplified sectional perspective view of a rear part of a nacelle,
- FIG. 8 is a simplified perspective view of a nacelle cover of the nacelle without nacelle roof,
- FIG. 9 is a simplified cross-sectional view of a flange connection of two nacelle cover panels, according to the prior art,
- FIG. 10 is a simplified cross-sectional view of a flange connection of two overlapping panels of the lateral side wall of the nacelle cover,
- FIG. 11 is a simplified cross-sectional view of a flange connection of an inner roof panel overlapping an outer roof panel of the nacelle roof,
- FIG. 12 is a simplified cross-sectional view of a flange connection attaching inner bottom panels to outer bottom panels of the nacelle,
- FIG. 13 is a simplified cross-sectional view of a flange connection attaching a hatch cover to a hatch in a panel,
- FIG. 14 is a simplified perspective view of a nacelle roof of the nacelle cover,
- FIG. 15 is a simplified bottom view of another embodiment of a nacelle roof,
- FIG. 16 is a simplified perspective view of the nacelle, having the center roof sections removed and detached in order to allow easy insertion/removal of a drive train,
- FIG. 17 is a simplified perspective bottom view of a nacelle bottom having detachable inner bottom cover panels,
- FIG 18 is a simplified perspective bottom view of a nacelle bottom having the inner bottom cover panels removed in order to winch up/down a gearbox of the wind turbine.

### Detailed description of embodiments

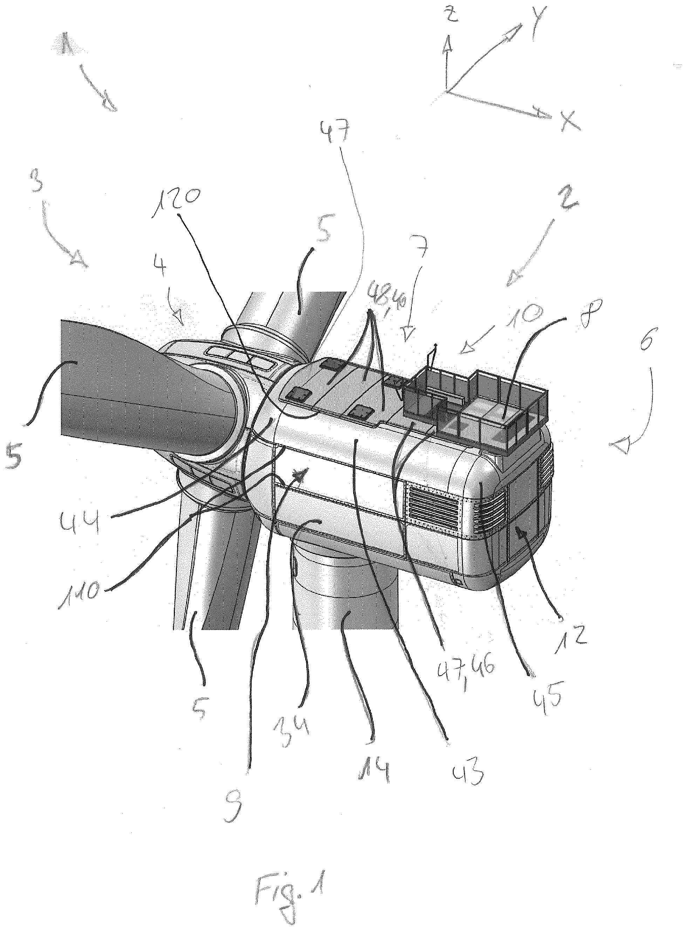

FIG. 1 shows a simplified perspective view of a wind turbine 1. The wind turbine 1 comprises a nacelle 2. The nacelle 2 extends in a vertical direction Z, which is substantially parallel to the axial extension of a supporting structure, in particular a tower 14 on which the nacelle 2 can be mounted. The nacelle also extends in a horizontal plane defined by a longitudinal direction X (which is substantially parallel to a drive train to be located in the nacelle) and a transversal direction Y. The longitudinal direction X and the transversal direction Y are both perpendicular to the vertical direction Z and to each other.

The nacelle 2 comprises a support frame 15 (not shown in FIG. 1) and a nacelle cover 6 that is coupled to the support frame 15.

The nacelle cover 6 comprises a plurality of panels 34 made of a composite, i.e. a glass fiber reinforced polymer (GFRP). Depending on the configuration and/or function of the panels 34, the description can refer to panels 34 by more specific terms, i.e. (referring to panels 34 of the nacelle roof 7) as outer lateral roof panel 43, outer front roof panel 44, outer rear roof panel 45, and inner roof panels 47. A plurality 48 of inner roof panels 47 can form or be a part of one or more center (roof) sections 46.

The panels 34 are connected to each other by means of connection flanges 37 that are integral to the panels.

The nacelle cover 6 comprises a self-supported nacelle roof 7 comprising a plurality of panels 43-45, 47. The self-supported nacelle roof 7 extends, in particular unsupported by the support frame 15, from the first lateral side wall 9 of the nacelle 2 to the second lateral side wall 10 of the nacelle.

The center of the self-supported nacelle roof 7 is configured as a large removable and detachable hatch cover for extensive service operations. More precisely, the inner roof panels 47, 48 in the center roof sections 46 of the nacelle roof 7 are configured to be removable, either alone or in distinct combinations of a plurality 48 of inner roof panels 47 forming the one or several removable and/or detachable center roof sections 46.

The term "detachable" in this context should be understood to describe panels 47 and roof sections 46 (which are distinct combinations of connected panels 47) that can be fully detached from the remaining part (e.g. the outer roof panels 43-45) of the nacelle 2 in an easy and convenient way. As such, removable and detachable panels 47 and/or center roof sections 46 are configured to be physically lifted away from the nacelle 2, e.g. by a lifter or crane, or by a helicopter and placed at ground level, e.g. on a jack-up barge. Sliding or revolving panels or roof sections which are not conceived to be easily and conveniently fully detachable from the nacelle 2 are therefore not considered to be removable and detachable within the meaning of this description.

In other words, a detachable connection is configured for repeated engagement and disconnection. The detachable connection is not constructed for single-time and/or permanent (or at least long lasting) engagement.

A permanent connection, on the other hand, is configured for single-time and/or permanent (or at least long lasting) engagement. Stated differently, the permanent connection is not constructed for a recurring engagement and disconnection.

For example, a welded connection is obviously considered to be a permanent connection.

A screwed connection, however, can be considered to form a detachable connection as well as a permanent connection, depending on the configuration of the screwed connection and the intended purpose.

A screwed connection comprising a castle nut secured by a safety cotter pin, for example, may be configured for easy and convenient detachment (and reattachment). The same applies to a screwed connection comprising a low-strength liquid bolt retaining compound (such as *"Loctite 221", "Loctite 222"* or comparable), which may be reapplied after every detachment.

A screwed connection comprising a medium-strength liquid bolt retaining compound (such as *"Loctite 243"* or comparable) or a high-strength liquid bolt retaining compound (such as *"Loctite 270", "Loctite 276'* or comparable), however, forms a permanent connection, even if such a connection can still be detached, for example by using solvents, a heat treatment, or special tools.

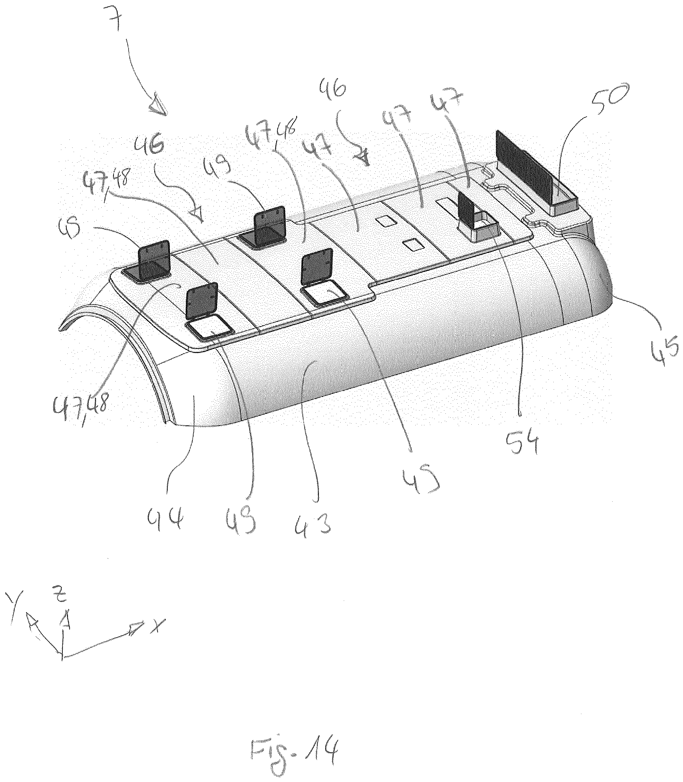

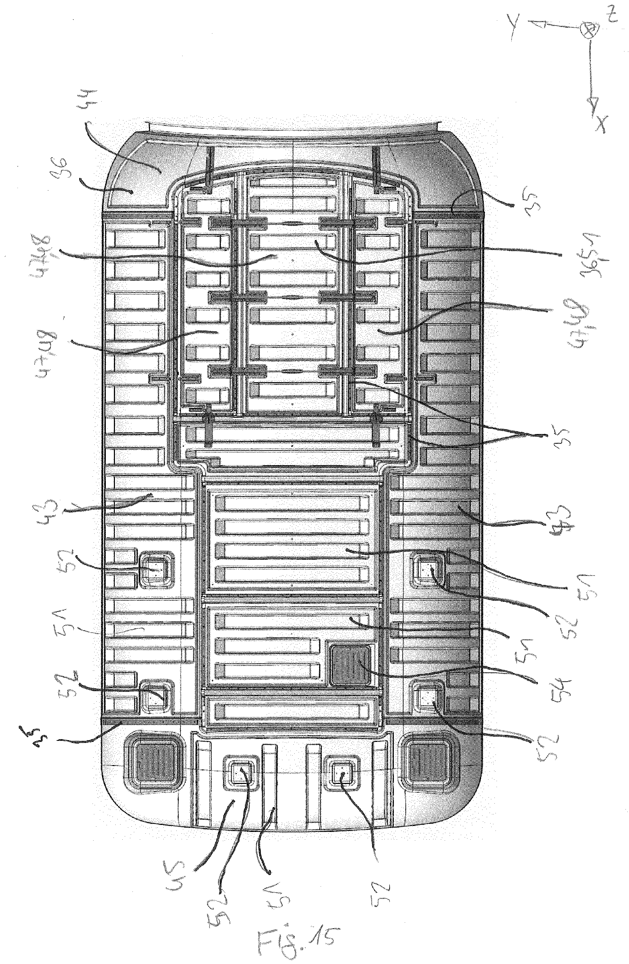

The self-supported nacelle roof 7 is more thoroughly described in the context of FIG. 14 and FIG. 15.

There is a helicopter hoisting platform 8 which is arranged and supported on a rear section of the nacelle roof 7. Technical staff and material can be hoisted onto the hoisting platform 8 from a helicopter.

Platform supports that are integral to the self-supported nacelle roof 7 support the helicopter hoisting platform 8. The helicopter hoisting platform 8 is separate from the nacelle roof 7, i.e. non-integral to the nacelle cover 6.

A wind park can comprise a plurality of the depicted wind turbines 1 comprising the nacelle 2.

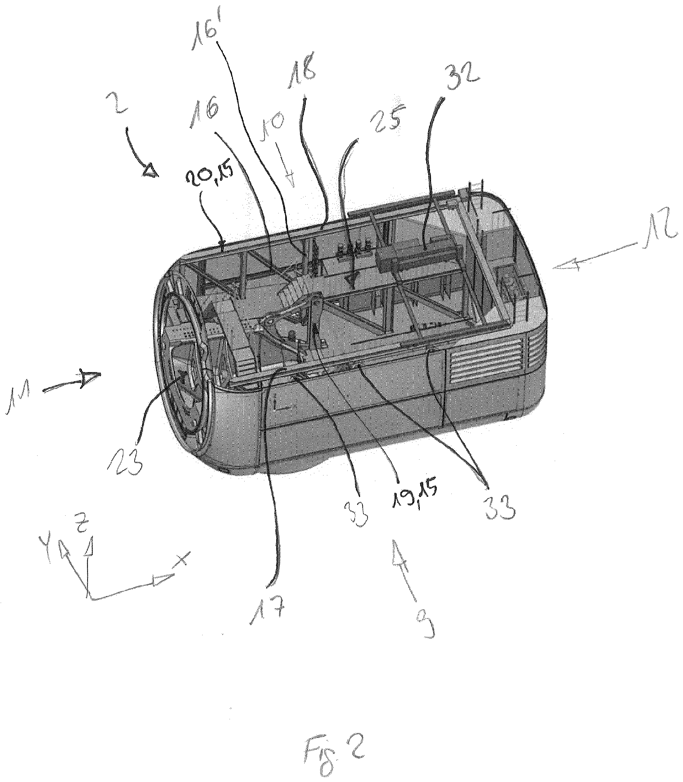

FIG. 2 shows a simplified perspective view on a nacelle of the wind turbine. The top cover of the nacelle is not shown. The nacelle 2 comprises a support frame 15 and a nacelle cover 6 (nacelle envelope, housing) surrounding (enclosing) the support frame 15.

The support frame 15 comprises a framework of beams 16 (truss members). The support frame 15 further comprises a first upper lateral longitudinal beam 17 at a first lateral side of the nacelle 2 and a second upper lateral longitudinal beam 18 at a second lateral side of the nacelle 2 being opposite to the first lateral side. The term "longitudinal" means that the beam extends in the longitudinal direction of the nacelle 2.

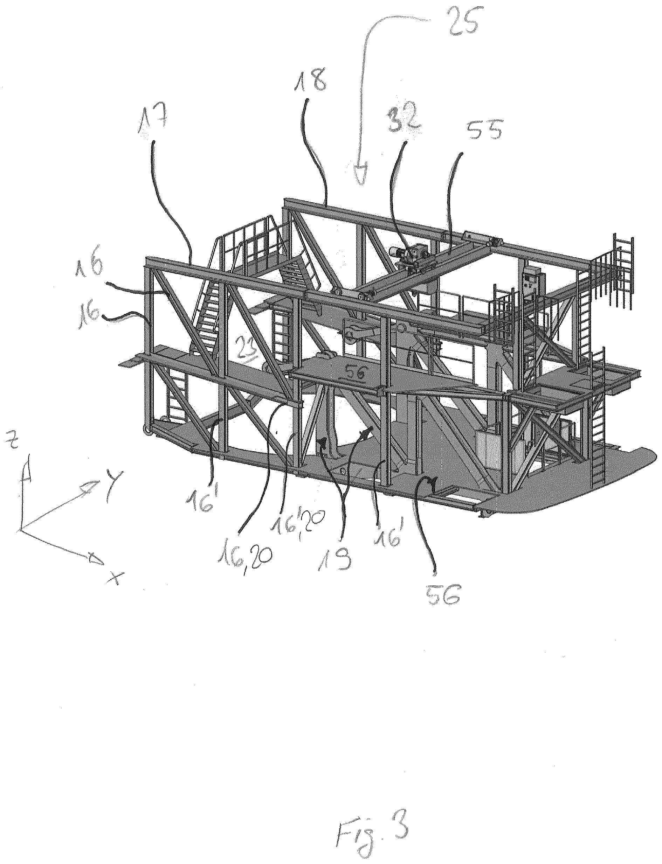

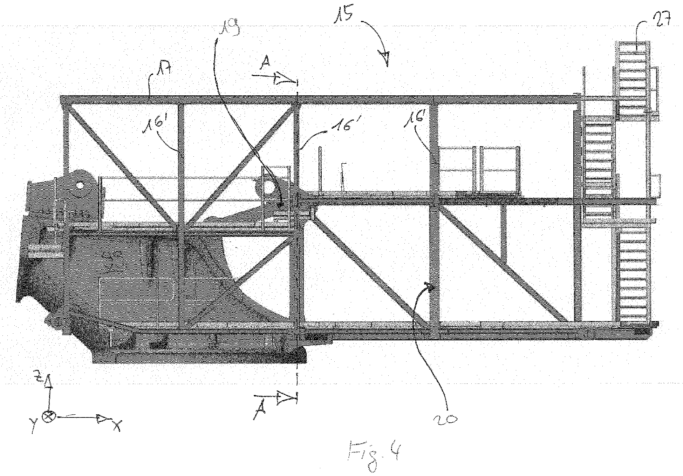

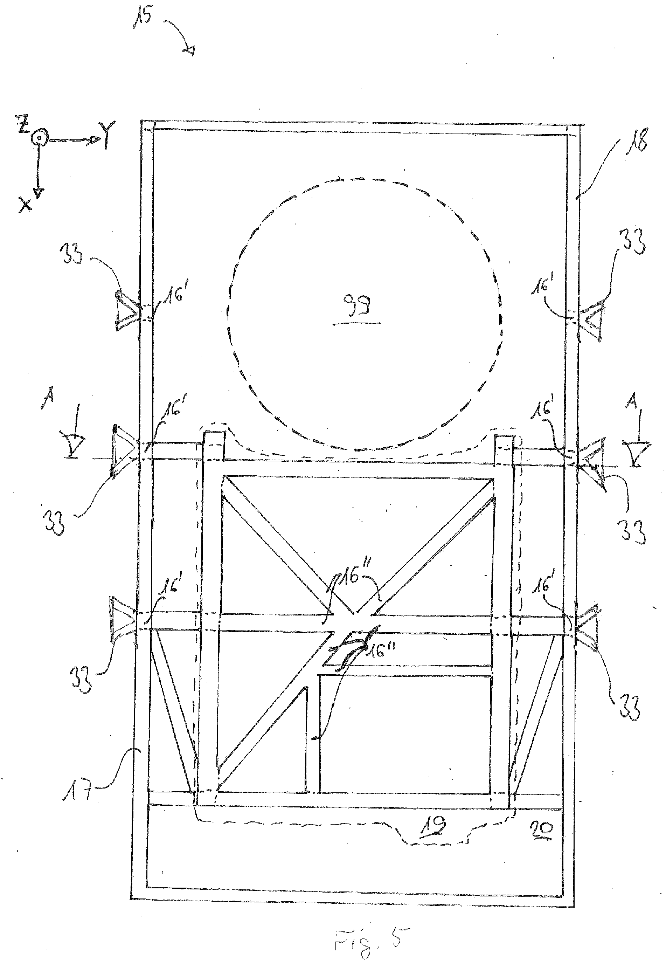

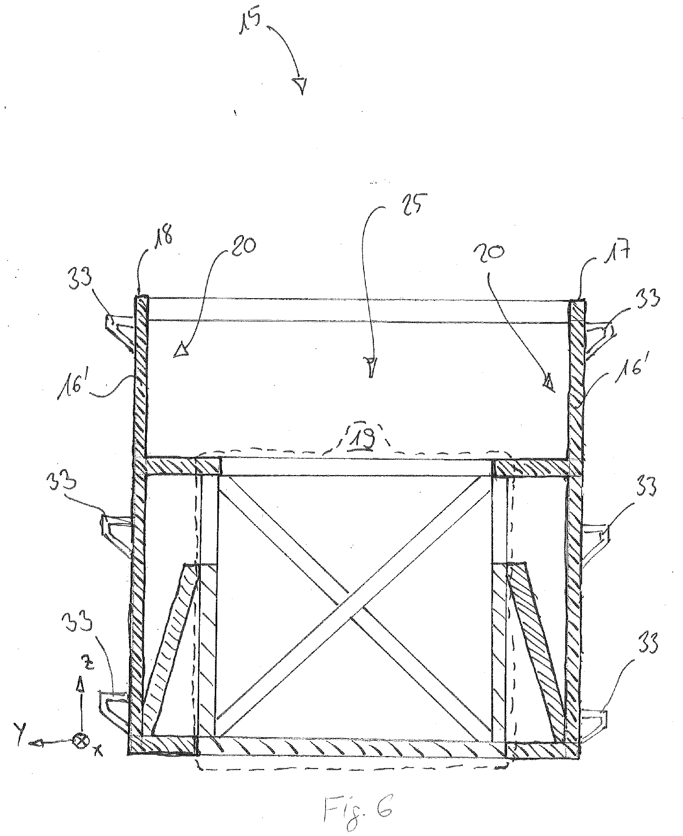

FIG. 3, FIG. 4, FIG. 5 and FIG. 6 show different views of a support frame 15 of the nacelle 2. The support frame 15 comprises a lower, inner/central portion (which is referred to as machine frame or inner support frame 19), and a framework structure arranged along a perimeter of the machine frame (which is referred to as outer support frame 20). The machine frame 19 is connected to the main frame 99 of the wind turbine 1. The framework structure of the outer support frame 20 is connected to the machine frame / inner support frame 19. The framework structure of the outer support frame 20 extends in a main direction from the lower part of the machine frame 19 along the vertical direction Z.

The first and the second upper lateral longitudinal beams 17, 18 substantially terminate lateral sections of the framework structure in the vertical direction Z.

A front section of the framework structure is free to provide a frontal passageway 23 for a main shaft (not shown). The main shaft connects a rotor hub (on the outside of the nacelle, shown in FIG. 1) and a gear box and/or a generator (on the inside of the nacelle, not shown).

A top section of the framework structure is kept free of transversal and/or longitudinal beams in order to provide an upper access opening or upper passageway for insertion, removal and replacement of components. No intermediate beams or truss members project over the drive train. The main shaft assembly, the gear box, and/or the generator (not shown) can be inserted into the nacelle 2 or removed from the nacelle 2 via the upper access opening or upper passageway 25 in the top section of the framework structure if the roof of the nacelle or rather the center (central section) of the roof can be removed and detached in accordance with the aspects of the present invention.

The whole drive train comprising the main assembly, the gearbox and the generator can be lowered into the nacelle and/or lifted from the nacelle through the upper passageway 25 in the top section of the framework structure if the top cover or roof of the nacelle is removed and detached in accordance with the aspect of the present invention.

A bottom section of the framework structure of the inner support frame can also comprise a lower access opening or lower passageway for lowering down or winching up components such as the generator, the main shaft assembly, the gearbox or other parts. Some (inner) truss members 16" of the inner support frame are configured to be removable to allow for the lower passageway to be enlarged temporarily.

The nacelle bottom cover can be configured to be removable and detachable at least in a center section such that parts of the drive train 31 can be lowered down and outside the nacelle 2. As such, inner bottom cover panels 133 can be configured as a sealed removable and detachable lid.

The nacelle bottom cover can comprise a service hatch in a rear inner bottom cover panel 133. The service hatch can comprise double wing doors, which may be supported by gas springs and open in an inward direction.

The nacelle cover 6 is mounted to the (outer) support frame 20, more particularly to (preferably vertical) beams 16' (columns) of the outer support frame via adjustable brackets 33. In the present embodiment, there are nine brackets in a three-by-three configuration arranged on each lateral side of the outer support frame 20.

A service crane 32 that is mounted on a trolley 55 which is configured to move on the first and second upper lateral longitudinal beams, providing internal lifting capacity for regular maintenance work. The trolley 55 can be configured to roll on the first and second lateral beams along the entire nacelle internals, in particular along the entire drive train. The trolley can be locked in a parking position, if the entire drive train is to be lifted.

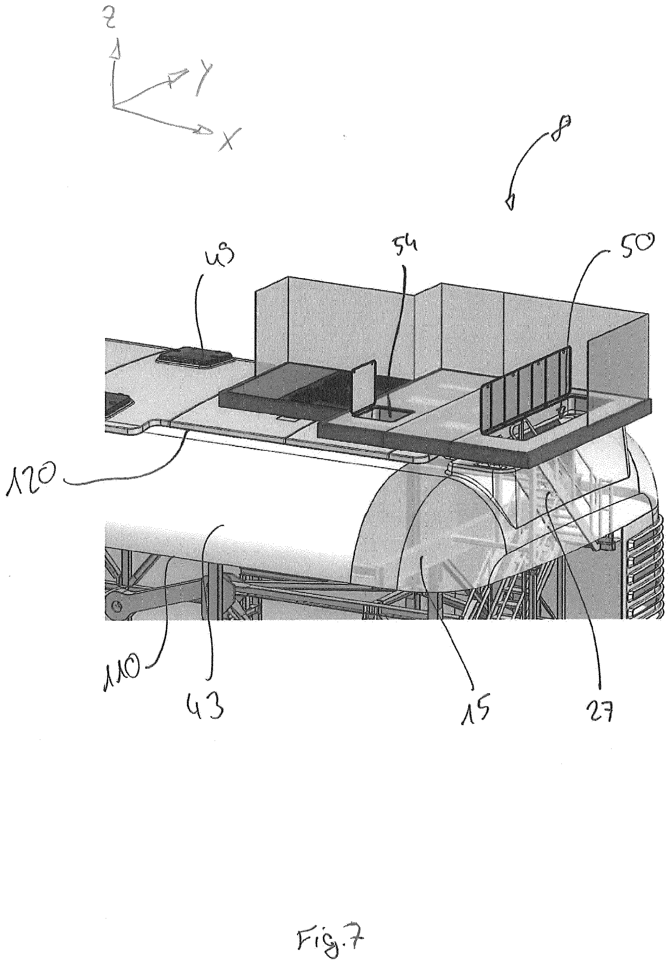

FIG. 7 shows a simplified sectional perspective view of a rear part of the nacelle 2. Some elements of the nacelle cover 6 and the railing fence of helicopter hoisting platform 8 are not shown to provide a view into the rear part of the nacelle 2.

The helicopter hoisting platform 8 comprises a rectangular access hatch 50 for a 45° stairway 27 centered in a rear section of the helicopter hoisting platform 8, and a supply hatch 54 arranged in a lateral region of the helicopter hoisting platform 8.

The stairway 27 is part of and/or connected to the (outer) support frame 15.

The (upper surface of) hatch covers 50, 54 are leveled (on the same level) with the walkable surface of helicopter hoisting platform 8.

The hatch covers are opened outwardly and rotated about the transversal direction Y towards the rotor 3. This arrangement provides for a minimal windage area exposed to the downwash of a helicopter hovering over the helicopter hoisting platform 8.

When closed, the hatch covers 50, 54 provide a walkable surface with anti-skid properties. Further, the hatch covers form an obstacle-free flat surface that is flush with the surrounding walkable area.

The respective hatch covers hermetically seal the corresponding hatches 50, 54 when closed.

Approximate hatch size of the access hatch 50 is 305 cm x 85 cm, in particular the access hatch 50 is longer than 200 cm and wider than 70 cm.

The access hatch 50 is equipped with hinges, gas springs, locking devices and a sealing rubber (elastomeric) element.

The hatches 50, 54 can be hold locked in the open position by a locking mechanism.

At least the access hatch 50 (but preferably most or all hatches 50, 54, 49) can be operated from the inside and the outside of the nacelle 2.

An upraised hatch adapter 95 levels the hatch covers 50, 54 with the surrounding walkable surface.

The approximate size of the support hatch 54 is 75 cm x 75 cm.

The support hatch 54 is equipped with hinges, gas springs, locking devices and a sealing rubber (elastomeric) element.

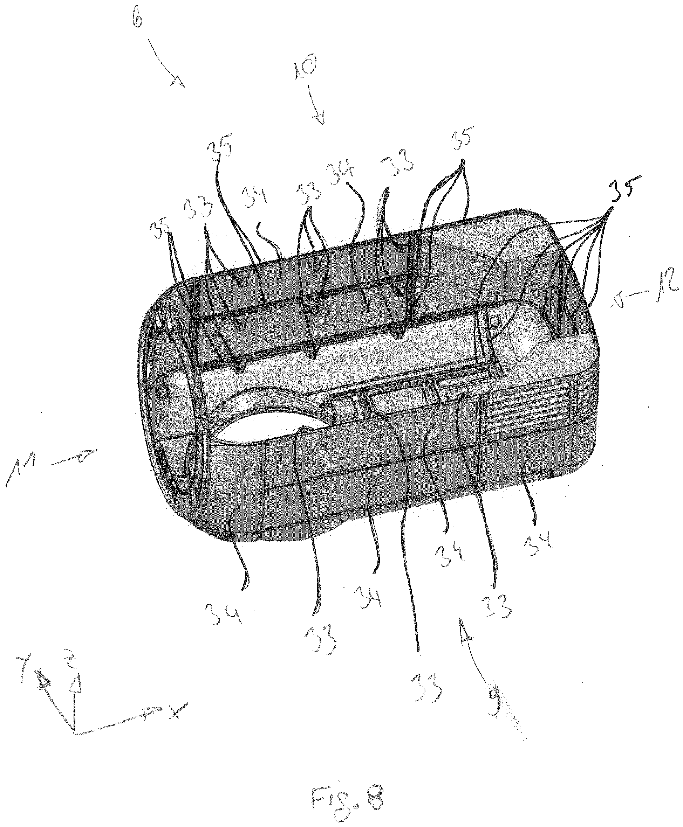

FIG. 8 shows a simplified perspective view on and into a nacelle cover 6 of the nacelle 2 without the nacelle roof 7 and the support frame 15. The nacelle cover 6 is generally made of and formed by a plurality of composite reinforced panels 34. The panels 34 are connected by flanges. The flange connection can be further reinforced by angular steel or other profiled metal bars 35. The nacelle cover 6 protects the drive train 31 and other internal components of the wind power installation 1 from harsh environmental conditions and in particular moisture.

The nacelle cover 6 comprises lateral nacelle side walls 9, 10, a nacelle front face 11, a nacelle rear wall 12, a nacelle bottom cover 13, and a nacelle roof 7.

The nacelle cover 6 is coupled to the support frame 15. More particularly, the lateral side walls 9, 10 of the nacelle cover 6 are coupled to the outer support frame 15. The nacelle roof 7 may also be coupled to the support frame 15. Thereby, the nacelle cover is directly or indirectly laterally supported by the support frame 15.

The laterally supported nacelle cover 6, including the wide span self-supported nacelle roof 7, is configured to guarantee structural integrity under predefined load cases, considering reaction loads between the composite panels of the nacelle cover 6 and the support frame 15, and performance in open and closed configurations.

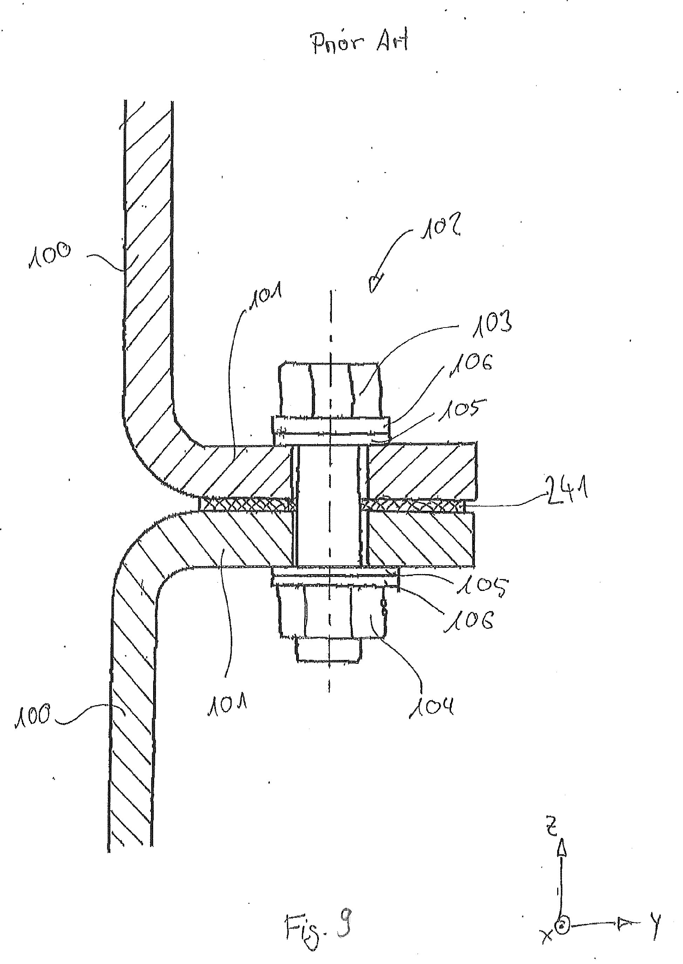

FIG. 9 shows a simplified cross-sectional view of a flange connection of two nacelle cover panels 100, according to the prior art. Flanges 101 extend perpendicularly from the panels 100. The flanges 101 are connected by a bolted (screwed) connection 102 on the in inside of the nacelle. This provides that the bolt 103 and the nut 104 are both accessible from inside the nacelle. The bolted connection may comprise additional washers 105 (i.e. optional elastomeric washers for sealing and/or spring washers) and metallic washers 106. Advantageously, due to the configuration of the flanges 101, the bolted assembly 102 on the inside of the nacelle is well protected from environmental effects outside the nacelle.

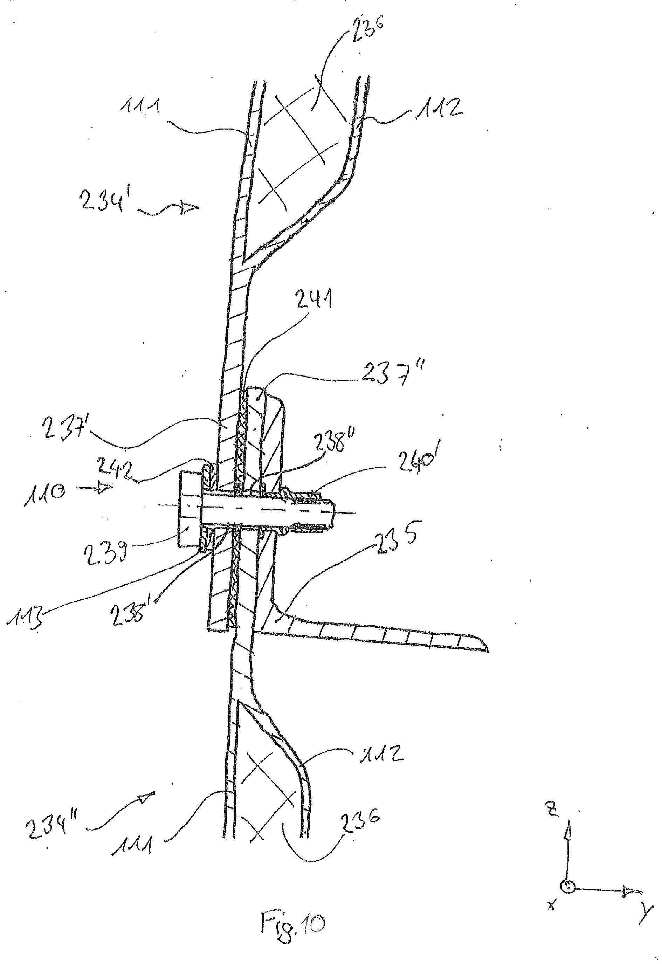

FIG. 10 shows a simplified perspective cross-sectional view of an exemplary flange connection 110 of two overlapping nacelle cover panels 234 according to an aspect of the invention. This flange connection is also referred to as a flange connection of a first type. The first type is advantageously used for the lateral and/or rear sides of the nacelle cover 6, i.e. for vertically extending sides and panels. The nacelle panels 234 are made of a composite, in particular a glass fiber reinforced polymer (GFRP).

Each composite panel 234 is manufactured as a wide span self-support composite panel. The panel 234 is configured as a typical sandwich lamination. Each panel 234 comprises an outer side fiberglass layer 111 and an inner side fiberglass layer 112. The panels 234 can optionally comprise a middle foam core 236 in-between the outer side fiberglass layer 111 and the inner side fiberglass layer 112. The foam core 236 can be configured to form reinforcement ribs in the panel 234. Alternatively, the foam core 236 can be a global foam core 236, i.e. spanning a major part of the panel 234. The foam cores 236 are covered by the outer side and inner side fiberglass layers 111, 112 and enhance the stability of the panel 234.

Resin infusion is utilized during the lamination process. In a one-shot resin infusion process, the resin is distributed in a uniform manner across the layup. Subsequently, bonding/curing the complete layup can be conducted, e.g. in an autoclave. Accordingly, a majority or all the composite panels of the nacelle are manufactured in a one-shot lamination/manufacturing step.

The panels 234 are connected to each other by means of overlapping flanges 237. Each of the flanges 237 is integral to one of the panels 234. The flanges 237 advantageously extend in the same plane as the panel 234 to which it belongs or at least in substantially the same plane as the region of the panel 234 adjacent to the flange 237. In other words, the respective flange 237 extends essentially straightly (not bent or curved) from the adjacent region of the panel 234.

The split line between the panels 234', 234" of the nacelle cover 6 extend in flat planes perpendicular to the surface of the panels and along the flange connection 110 between the panels 234', 234" (here in direction X).

The arrangement of the panels of the nacelle cover in general, and in particular of the overlapping flanges 237, is based on a high-point drainage concept. This means that the flange 237' of the top panel 234' of a flange connection 110 having a higher altitude (greater level) spans/overlaps the flange 237" of the complementary bottom panel 234" (the bottom panel 234" having a lower altitude) on an outer surface of the nacelle in a downward direction. Hence, the arrangement of the overlapping flanges 237', 237" advantageously exploits gravitational forces which determine the water flow direction in order to keep water from flowing into the nacelle.

The drillings 238 (drill holes) for the flange connection 110 are applied after the manufacturing process of the composite panels 234, i.e. after curing and/or autoclaving the panels 234. Drilling of the drill holes can be conducted after the respective panels 234', 234" are adjusted to each other, or alternatively by using a drilling template or a CNC-guided drilling machine. With this procedure, the accuracy of fit of corresponding drillings 238', 238" in the flanges 237 of both respective panels 234 is advantageously ensured.

According to an aspect, specialized threaded bolts 239 and nuts 240 are used. Either a (clinch) bolt 239' or a (clinch / rivet) nut 240' is pressed (clinched, riveted) into a reinforcing metal beam 235 that is part of the flange connection 110. Given this procedure, the attached threaded bolt 239' or nut 240' is fixed in position and is not rotatable. The complementary nut 240 or bolt 239 used to tighten the connection joint can accordingly be applied from the inside or outside of the nacelle, depending on the configuration (the flange connection 110 being a permanent connection or a detachable connection). Generally, a detachable flange connection should be accessible at least from inside the nacelle. No access to the joint is necessary from the outside which advantageously decreases the risk during assembling or maintaining the nacelle. A permanent flange connection 110 may be operated (loosened/disengaged, tightened/engaged) from inside or the outside the nacelle, depending on accessibility of the flange connection.

In this embodiment, a rivet nut 240' is riveted to the metal bar 235 on the inside. The bolt 239 is screwed into the rivet nut 240' from the outside.

The flange connection 110 is reinforced by profiled metal bars 235 (metal beams), which can be arranged adjacent to the flanges 237 (and extending along the split line), thereby becoming a part of the flange connection 110. The metal bars 235 can, for example, exhibit a flat bar shape and/or an "L"-shape (as shown). The metal bars 235 are mounted to the connection joints to stabilize the flange connection. Furthermore, the "L"-shaped metal bars 235 are further used and configured to mount the composite panels 234 to the lateral sections of the framework structure of the support frame. Adjustable brackets can be coupled to the L-shaped or angular metal bars 235 and the support frame, i.e. the beams or truss members of the outer support frame.

The metal bars 235 can be arranged and conductively interconnected such that they form a faraday cage to provide a lightning protection of the drive train and other components.

Between the panels 234 a sealing 241 is applied and provides water and air tightness of the flange connection 110. Water and air tightness generally refers to a liquid/fluid ingress protection under environmental conditions the nacelle is exposed to. Moreover, sealing paste can be used to tighten the drill holes 238', 238" with respect to water and air. A liquid bolt retaining compound (also: liquid screw retention or liquid screw locking) can protect the screwed connection of the bolt 239 and the nut 240 against undesired loosening. An elastomeric (rubber/silicone) washer 242 is applied between a steel washer 113 and the flange 237.

The flange connection 110 is configured to be a substantially maintenance free connection, having an expected/calculated lifetime of approximately twenty-five years.

In short, the flange connection 110 comprises (from outside to inside of the nacelle) a bolt 239 extending through a metal washer 113, an elastomeric washer 242, a drill hole 238' in the outer/top panel 234', an elastomeric sealing 241, a drill hole 238" in the inner/bottom panel 234", and a rivet nut 240' riveted into a hole of a profiled metal bar 235. The bolt 239 is screwed into the rivet nut 240' from the outside.

The concept of planar flange connections 110 in combination with the high-point drainage concept has surprisingly proven to be more robust and easier to maintain than the prior art flange connections 100.

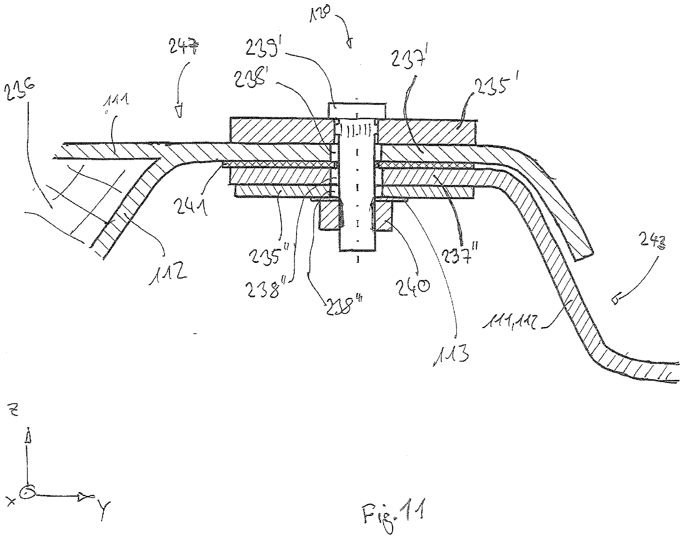

FIG. 11 shows a simplified cross-sectional view of a flange connection 120 of an inner roof panel 247 overlapping an outer lateral roof panel 243 of the nacelle roof. The configuration/construction of the panels 234, more specifically the inner roof panels 247 and outer roof panels 243 is substantially comparable/similar to the panels 234 of the side 243 and rear walls 245 of the nacelle. This flange connection 120 is also referred to as a flange connection of a second type.

Each panel 247, 243 comprises an outer side fiberglass layer 111 and an inner side fiberglass layer 112. The panels 247, 243 can optionally comprise a middle foam core 236 in-between the outer side fiberglass layer 111 and the inner side fiberglass layer 112. The foam core 236 can be configured to form reinforcement ribs in the panels 247, 243. Preferably, the ribs extend along the vertical direction Z and/or the transverse direction Y. Alternatively, the foam core 236 can be a global foam core 236, i.e. spanning over a major portion of the panel 247, 243. The foam cores 236 are covered by the outer side and inner side fiberglass layers 111, 112 and enhance the stability of the panels 247, 243.

The panels 247, 243 are connected to each other by means of overlapping flanges 237. Each of the flanges 237 is integral to one of the panels 247, 243. The flanges 237 advantageously extend in the same plane as the panel 247, 243 to which it belongs or at least in substantially the same plane as the region of the panel 247, 243 adjacent to the flange 237.

The split line between the panels 247, 243 of the nacelle cover 6 extend in flat planes perpendicular to the surface of the panels and along the flange connection 120 between the panels 247, 243' (here in direction X).

The arrangement of the panels of the nacelle cover in general, and in particular of the overlapping flanges 237, is based on the high-point drainage concept. This means that the flange 237' of the top panel 234' of a flange connection 120 having a higher level overlaps the flange 237" of the complementary bottom panel 234" on an outer surface of the nacelle in a downward direction.

The drill holes 238 for the flange connection 120 are applied after the manufacturing process of the composite panels 243, 247.

A clinch bolt 239' having a straight-knurled press-fit collar below its head (or generally speaking under heads serrations) is pressed into a(n outer) reinforcing metal bar 235' that is part of the flange connection 120. The clinch bolt 239' is fixed to the metal bar 235' in a rotatably fixed manner.

A complementary nut 240 is used to tighten the flange connection 120.

The flange connection 120 is a detachable flange connection and can be detached from inside the nacelle.

The flange connection 120 is reinforced by profiled metal bars 235', 235" on the inside and the outside of the nacelle adjacent to the top flange 237' and the bottom flange 237", respectively. The metal bars 235', 235" substantially sandwich the flanges 237', 237" of the panels 247, 243 in-between. The metal bars 235', 235" extend along the split line (the direction of extension of the flange connection 120 between panels). The metal bars 235', 235" are a part of the flange connection 120. The metal bars 235 can have a flat bar shape (as shown) or a "L"-shaped profile (not shown).

The metal bars 235 can be arranged and conductively interconnected such that they form a faraday cage to provide a lightning protection of the drive train and other components.

Between the panels 247, 243 a sealing 241 is applied and provides water and air tightness of the flange connection 120. Water and air tightness generally refers to a liquid/fluid ingress protection under environmental conditions the nacelle is exposed to.

Moreover, sealing paste can be used to tighten the drill holes 238', 238" with respect to water and air. A liquid bolt retaining compound can protect the screwed connection of the (clinch) bolt 239' and the nut 240 against undesired loosening. The flange connection 120 further comprises a steel washer 113 (and/or spring washer) between the inside metal bar 235" and the nut 240.

The flange connection 120 is configured to be a substantially maintenance free connection, having an expected/calculated lifetime of approximately twenty-five years.

In short, the flange connection 120 comprises (from outside to inside of the nacelle) a bolt 239' pressed into (a hole in) the outside metal bar 235', and further extending through a drill hole 238' in the top flange 237' (of the inner roof panel 247), an elastomeric sealing 241, a drill hole 238" in the bottom flange 237", a hole in an inside metal bar 235"and a nut 240 screwed to the bolt 239' from the inside.

The concept of planar flange connections 120 in combination with the high-point drainage concept has surprisingly proven to be more robust and easier to maintain than the prior art flange connections 100.

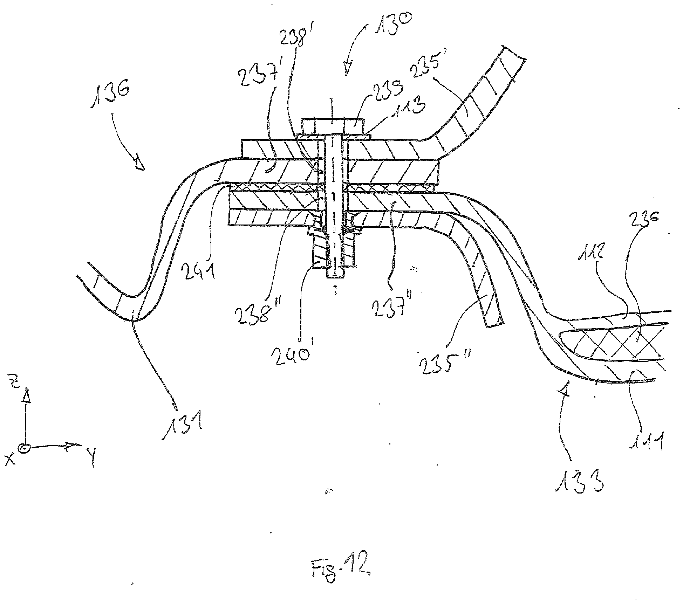

FIG. 12 is a simplified cross-sectional view of a flange connection 130 attaching inner bottom panels 133 to outer bottom panels 136 of the nacelle. This flange connection is also referred to as a flange connection of a third type. The third type is advantageously used for the bottom panels, in particular for connecting the inner bottom panels 133 to the outer bottom panels 136. The configuration/construction of the panels, more specifically the inner bottom panels 133 and outer bottom panels 136, is substantially comparable/similar to the panels 247, 243 of the nacelle roof.

Each panel 133, 136 comprises an outer side fiberglass layer 111 and an inner side fiberglass layer 112. The panels 133, 136 can optionally comprise a middle foam core 236 in-between the outer side fiberglass layer 111 and the inner side fiberglass layer 112. The foam core 236 can be a global foam core 236, i.e. spanning over a major portion of the panels 133, 136. The foam cores 236 are covered by the outer side and inner side fiberglass layers 111, 112 and enhance the stability of the panels 133, 136.

The panels are connected to each other by means of overlapping flanges 237. Each of the flanges 237', 237" is integral to one of the panels 133, 136. The flanges 237 advantageously extend in the same plane as the panel 133, 136 to which it belongs, or at least in substantially the same plane as the region of the panel adjacent to the flange 237.

The split line between the panels 136, 133 of the nacelle cover 6 extend in flat planes perpendicular to the surface of the panels and along the flange connection 130 between the panels 136, 133 (here in direction X).

The arrangement of the panels of the nacelle cover in general, and in particular of the overlapping flanges 237', 237" and the inner and outer bottom panels 133, 136 in the bottom of the nacelle, is based on the high-point drainage concept.

The inner bottom panels 133 are configured to be detachable panels. The inner bottom panels 133 cover/span the opening between the outer bottom panels 136 from the outside.

With regard to the high-point drainage concept, this means that the outer bottom panels 136 comprise a(n outer) drip edge 131 that has a substantially lower level than the flange connection 130.

In other words, the flange connection 130 according to this embodiment is located in an indentation with respect to a surrounding surface of the adjacent panels 133, 136. This kind of flange connection is advantageously used at the bottom of a nacelle. The flange connection does then have greater height (altitude) than the surrounding panels which improves water tightness.

The drill holes 238 for the flange connection 130 are applied after the manufacturing process of the composite panels 133, 136.

Either a bolt 239' or a nut 240' is pressed into a reinforcing metal beam 235 that is part of the flange connection 130. The attached threaded bolt 239' or nut 40' is therefore fixed in position and not rotatable. The complementary nut 240 or bolt 239 used to tighten the connection joint can accordingly be applied from the inside or outside of the nacelle, depending on the configuration (the flange connection 130 being a permanent connection or a detachable connection). Generally, a detachable flange connection should be accessible from inside the nacelle. A permanent flange connection 130 may be operated (loosened/disengaged, tightened/engaged) from inside or the outside the nacelle, depending on accessibility of the flange connection.

In this embodiment, a rivet nut 240' is riveted to the lower metal beam 235". A bolt 239 is screwed into the rivet nut 240' from the inside to tighten the detachable flange connection 130.

The flange connection 120 is reinforced by profiled metal bars 235', 235" on the inside and the outside of the nacelle adjacent to the top flange 237' and the bottom flange 237", respectively. The metal bars are substantially "L-shaped having an obtuse angle (shown) or alternatively have a flat bar profile (not shown). The metal bars 235', 235" substantially sandwich the flanges 237', 237" of the panels 136, 133 in-between. The metal bars 235', 235" extend along the split line between adjacent panels. The metal bars 235', 235" are a part of the flange connection 130.

The metal bars 235 can be arranged and conductively interconnected such that they form a faraday cage to provide a lightning protection of the drive train and other components.

Between the panels 136, 133 a sealing 241 is applied and provides water and air tightness of the flange connection 130.

Moreover, sealing paste can be used to tighten the drill holes 238', 238" with respect to water and air. A liquid bolt retaining compound can protect the screwed connection of the bolt 239 and the rivet nut 240' against undesired loosening. The flange connection 130 further comprises a steel washer 113 (and/or a spring washer) between the inside metal bar 235' and the bolt 239.

The flange connection 130 can be configured to be a substantially maintenance free connection.

In short, the flange connection 130 comprises (from inside to outside of the nacelle 2) a bolt 239 extending through a metal washer 113 and a hole of the inside metal bar 235', the bolt 239 further extending through a drill hole 38' in the top flange 237' (of the outer bottom panel 136), an elastomeric sealing 241, a drill hole 238" in the bottom flange 237" (of the inner bottom panel 133), and a rivet nut 240' riveted into in an outside metal bar 235". The bolt 239 is screwed into the rivet nut 240' from the inside.

The concept of planar flange connections 130 in combination with the high drainage concept has surprisingly proven to be more robust and easier to maintain than the prior art flange connections 100.

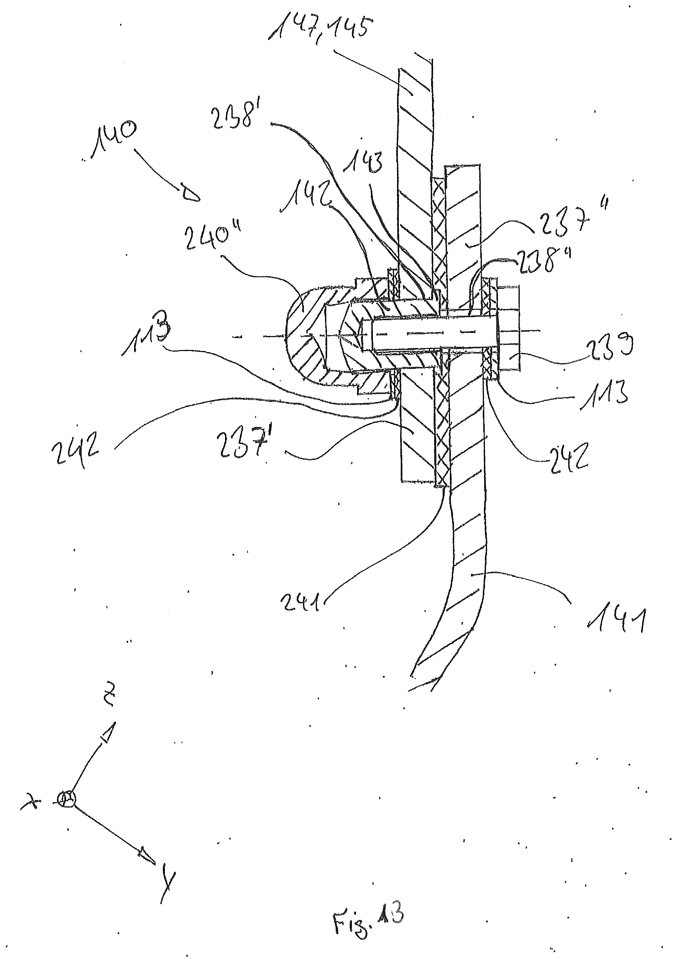

FIG. 13 is a simplified cross-sectional view of a flange connection 140 attaching a hatch cover 141 (e.g. of a lateral extension arm hatch) to an outer front or rear bottom panel 147, 145. This flange connection is also referred to as a flange connection of the fourth type. The hatch cover 141 can be opened and closed from inside the nacelle.

The panel 147, 145 and the hatch cover 141 are connected to each other by means of overlapping flanges 237. Each of the flanges 237', 237" is integral to one of the panel 147, 145 and the hatch 141, respectively. The flange 237 extends in the same plane as the panel 147, 143.

The hatch cover 141 covers/spans the opening in the outer front/rear bottom panel 147, 145 from the inside.

The drill holes 238 for the flange connection 130 are applied after the manufacturing process of the composite panels 147, 145, 141.

A bushing 142 having a male (outer) threading at an outer surface and a female (inner) threading at an inner surface comprises (in axial direction of the threading) a thin end and a thickened end comprising a collar 143. The bushing 142 is inserted - thin end first, thickened end last - from inside to outside the nacelle through a drill hole 238' in the outside flange 237'. A cap nut 240" is screwed onto the male threading of the bushing 142 from the outside. The cap nut 240" and outside flange 237' sandwich a steel washer 113 and an elastomeric washer 242 in-between. The steel washer 113 is positioned adjacent the cap nut 240", the elastomeric washer 242 between steel washer 113 and outside flange 237'. There is a sealing 241 positioned adjacent to the outside flange 237' of the outer (bottom) panel 147, 145 and sandwiched between the outside flange 237' and the inside flange 237". A bolt 239 extends (from the inside) through a steel washer 113, an elastomeric washer 242, a hole in the inside flange 237", and the sealing 241. The bolt 239 is screwed into the female threading of the bushing 141.

Moreover, sealing paste can be used to tighten the drill holes 238', 238" in the flanges 237', 237" with respect to water and air. A liquid bolt retaining compound can protect the screwed connection of the cap nut 240" and the bushing 142, and the bolt 239 and the bushing 142 against undesired loosening.

The flange connection 130 can be configured to be a substantially maintenance free connection.

In short, the flange connection 130 comprises (from inside to outside of the nacelle) a bolt 239 extending through a metal washer 113 and an elastomeric washer 242. The bolt 239 further extends through a drill hole 238" in the inside flange 237" (of the hatch cover 141), an elastomeric sealing 241, into a bushing 142. The bushing extends through a hole 238' in the outside flange 237', an elastomeric washer 242, a steel washer 113 and into the cap nut 240". The bolt 239 is screwed into the bushing 142, and the bushing 142 is screwed into the cap nut 240".

The concept of planar flange connections 140 provides an air and watertight hatch cover that can be operated from inside the nacelle.

FIG. 14 shows a simplified perspective view of a nacelle roof 7 of the nacelle cover 6. The nacelle roof 7 is considered to be self-supported by the lateral nacelle side walls 9, 10 and the nacelle rear wall 12. Accordingly, the nacelle roof 7 is only supported along sections of its outer (lower) circumference. Therefore, the nacelle roof 7 is unsupported in an area between the first and the second upper lateral longitudinal beams 17, 18.

Basically, the nacelle roof 7 comprises four outer roof panels (two outer lateral roof panels 43, one outer front roof panel 44, and one outer rear roof panel 45). The outer roof panels are supported by the lateral nacelle side walls 9, 10 and the nacelle rear wall 12.

The nacelle roof 7 further comprises one or more center roof sections 46. The nacelle roof 7 comprises six inner roof panels 47 in the center roof sections 46. Thereby, the nacelle roof 6 comprises around 10 panels 34. Advantageously, the number of panels 34 of the self-supported roof 7 may be between five and twelve. It is therefore apparent that the number of panels 34 should be lower than thirty, in particular lower than twenty, more particularly lower than fifteen.

A first plurality 48 of inner roof panels 47 extends in the transversal direction Y. The respective inner roof panels 47 therefore have a greater width along the transversal direction Y than a length along the longitudinal direction X. This configuration provides an exceptionally strong and sturdy self supported nacelle roof 7.

The first plurality 48 is located closer to the hub 4 of the nacelle 2 than to the rear of the nacelle 2.

A second plurality of inner roof panels 47, in an area closer to the rear end of the nacelle 2, can be configured to extend from one lateral side to the other lateral side of the nacelle 2. The length of the panel(s) in the transversal direction is greater than the width of the panel(s) in longitudinal direction.

In an embodiment, all split lines between the inner roof panels 47 (and all the corresponding flange connections) may extend in transversal direction.

The center of the self-supported nacelle roof 7 is configured as a large removable and detachable hatch cover for extensive service operations. More precisely, the inner roof panels 47 in the center roof sections 46 of the nacelle roof 7 are configured to be removable and detachable, either alone or in distinct combinations forming the one or several removable and detachable center roof sections 46.

The first plurality 48 of inner roof panels 47 can comprise sling hatches 49 that allow sling gears to be fastened on the inside of the nacelle without removing and detaching the nacelle roof 7.

The outer rear roof panel can comprise an elongated and rectangular access hatch 50 having a length of approximately 2 m to 4 m and a width of at least 60 cm. The access hatch 50 is arranged extending in a transversal direction a rear part of the nacelle 2. A staircase having a 45° inclination allows easy and safe access through the access hatch 50. The staircase can form a rear section of the (outer) support frame 15.

A supply hatch 54 can be used to lower gear and materials into the nacelle 2. The supply hatch 54 can be arranged in one of the inner roof panels 47, preferably in one of the inner roof panels 47 on the rear side of the nacelle roof 7.

FIG. 15 shows a simplified bottom view of another embodiment of a nacelle roof 7. At least one panel 34 of the self-supported nacelle roof 7 is reinforced by at least one rib 51. Apparently, all roof panels 34 but the outer front roof panel 44 comprise ribs. The outer front roof panel 44 still comprises a reinforced foam core structure, i.e. a global core. The ribs are an integral part of the panels 34. A first plurality 48 of inner roof panels 47 extends in the longitudinal direction X. The first plurality 48 can be located closer to the hub 4 of the nacelle 2 than to the rear of the nacelle 2. The outer (lateral) two of the first plurality 48 of inner roof panels 47 can be unfastened by service personnel and subsequently opened by linear drives.

The outer lateral roof panels 43 and the outer rear roof panel 45 further comprise platform supports 52.

A helicopter hoisting platform 8 is supported on the platform supports 52.

The outer rear roof panel 45 further comprises access hatches 50. An inner roof panel 47 on the back side of the nacelle roof 7 comprises a supply hatch.

If the number of ribs is to be reduced, one or more panels of the roof of the nacelle are advantageously configured to extend from one lateral side to the other lateral side (i.e. for example from the first upper lateral longitudinal beam to the second upper lateral longitudinal beam). The length of the panel(s) in the transversal direction may then be greater than the width of the panel(s) in longitudinal direction. This configuration can advantageously apply to panels close to the hub of the nacelle (panels in the front section of the roof of the nacelle). In other words, connection lines between adjacent panels are advantageously arranged in a transversal direction rather than in longitudinal direction, at least in the front region of the nacelle roof. According to this aspect of the invention, it has been found out that it is more advantageous to arrange the panels such that they extend from lateral side to lateral side and are shorter in longitudinal direction than in transversal direction rather than extending in longitudinal direction. This allows reducing the number of ribs or even not using ribs at all.

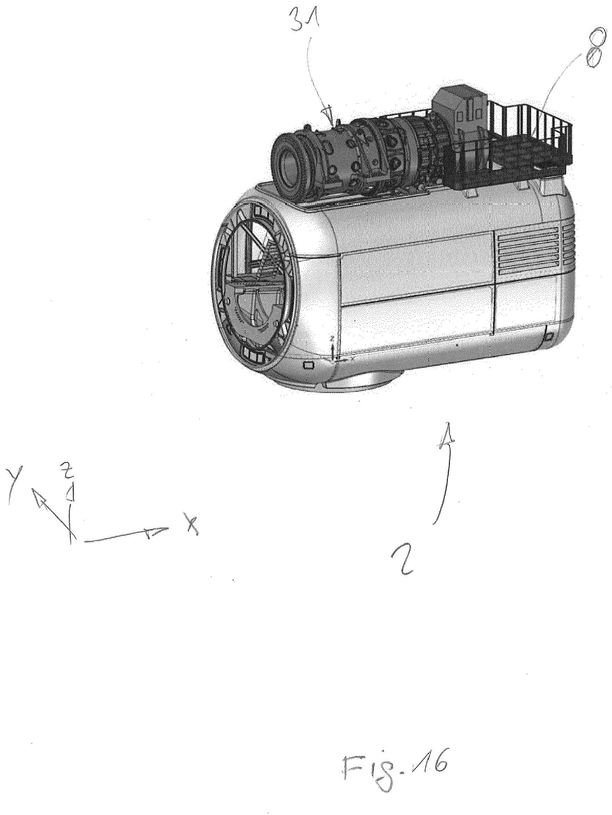

FIG. 16 shows a simplified perspective view of the nacelle 2, having the center roof sections 46 removed and detached from the nacelle cover in order to allow easy insertion of a drive train 31. The nacelle roof 7 is configured to be removable and detachable at least in a center section 46 such that parts of or the complete drive train 31 can be lifted upwardly and outside the nacelle. The center roof sections 46 of the nacelle roof can be configured as a sealed removable and detachable lid. Advantageously, the center roof sections 46 can be removed and detached individually or as a group to provide a variety of opening sizes. Some of the inner roof panels 47 can be configured as hinged access hatch.

A wind turbine 1 according to the present invention may preferably have a rated power of 8,000 kW or more. The rotor diameter may be more than 100 m, in particular 160 m or more meters. The number of rotor blades 5 of the rotor 3 may be three. The generator may be synchronous and based on permanent magnetism. The converter type may be a four quadrant converter.

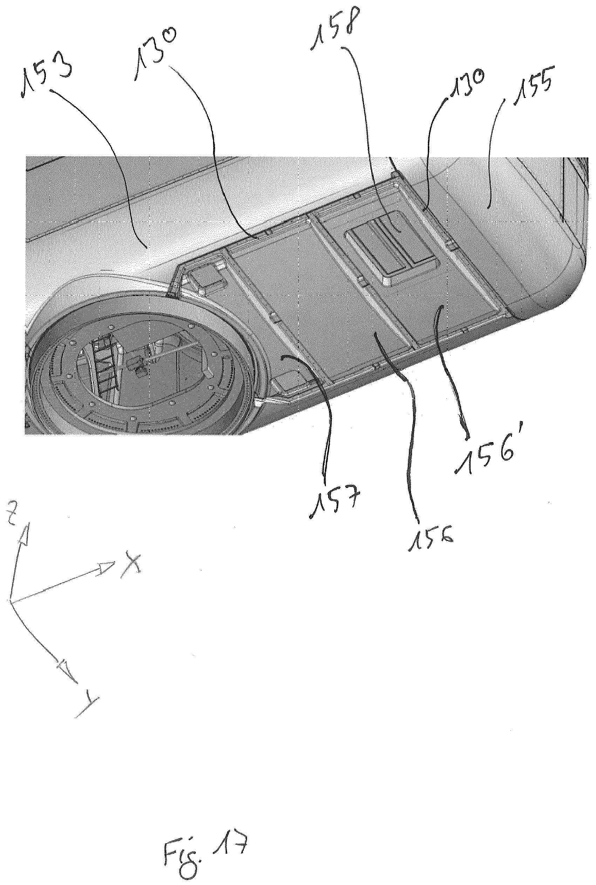

FIG. 17 shows a simplified perspective bottom view of a nacelle bottom having detachable inner bottom cover panels 156. The bottom cover of the nacelle 2 comprises outer lateral bottom panels 153, 136, an outer rear bottom panel 155, 136, detachable inner bottom panels 156, 133 and a fixed inner bottom panel 157, 133. An inner bottom panel 156' comprises a bottom hatch 158 for hoisting supplies from/to the nacelle 2.

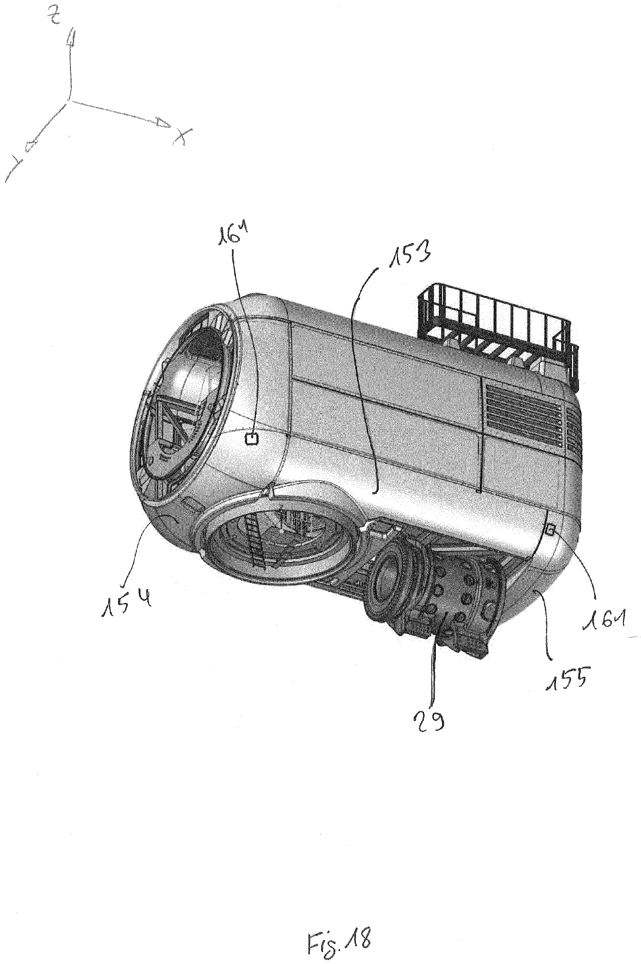

FIG 18 is a simplified perspective bottom view of a nacelle bottom having the inner bottom cover panels 156 removed in order to winch up/down a main shaft assembly 29 of the wind turbine 1. Depending on the size of the winched component, it may be necessary to temporarily remove detachable trusses 16" of the inner support frame 19, to allow the winched component 29 being allowed to pass through the bottom/lower passageway.

The outer front/rear bottom panels 154, 155 comprise extension arm hatches 161, which can be removed for extending extension arms (not shown) through the extension arm hatches.

Although the invention has been described hereinabove with reference to specific embodiments, it is not limited to these embodiments and no doubt further alternatives will occur to the skilled person that lie within the scope of the invention as claimed.

## Claims

1. A nacelle for a wind turbine, the nacelle comprising an support frame and a nacelle cover coupled to the support frame, wherein the nacelle cover comprises a self-supported nacelle roof comprising a plurality of panels made of a composite, the panels being connected to each other by means of connection flanges integral to the panels, wherein the self-supported nacelle roof extends, while being unsupported by the support frame at least in a center section of the self-supported roof, from a first lateral side of the nacelle to a second lateral side of the nacelle.

2. The nacelle of claim 1, wherein at least the center section of the self-supported nacelle roof is only supported by side, rear and/or front panels of the nacelle.

3. The nacelle of claim 1 or 2, wherein at least one panel of the self-supported roof is reinforced by at least one rib.

4. The nacelle of anyone of the preceding claims, wherein a number of the panels of the center section of the self-supported roof is equal to or greater than four and less than or equal to thirty.

5. The nacelle of anyone of the preceding claims, wherein a majority of the connection flanges between adjacent panels of the center section of the self-supported roof extend in a transversal direction.

6. The nacelle of anyone of the preceding claims, wherein a first plurality of panels of the center section has a longer extension in a transversal direction than in a longitudinal direction and extends from the first lateral side of the nacelle to the second lateral side of the nacelle in the transversal direction and the first plurality is located closer to a hub of the nacelle than to the rear of the nacelle.

7. The nacelle of anyone of the preceding claims, wherein the center section of the self-supported nacelle roof is configured as a large removable and detachable hatch for extensive service operations.

8. The nacelle of anyone of the preceding claims, wherein the nacelle cover is mounted to the support frame by (adjustable) brackets.

9. The nacelle of anyone of the preceding claims, wherein the support frame comprises a first upper lateral longitudinal beam at the first lateral side of the nacelle and a second upper lateral longitudinal beam at the second lateral side of the nacelle.

10. The nacelle of claim 9, further comprising a crane mounted on a trolley, wherein the trolley is configured to roll on the first and second upper lateral longitudinal beams along an entirety of nacelle internals, in particular the entire drive train.

11. The nacelle of anyone of the preceding claims, wherein at least parts of the self-supported nacelle roof is configured to be removable and detachable from the nacelle such that parts of or the complete drive train can be lifted upwardly and outside the nacelle when the self-supported nacelle roof is removed and detached.

12. The nacelle of anyone of the preceding claims, wherein the trolley can be locked in a parking position, if the entire drive train is lifted.

13. A wind turbine comprising a nacelle according to any previous claim.

14. A wind park comprising a plurality of wind turbines according to claim 13.
